# EUROPEAN PATENT APPLICATION

(11) **EP 4 518 526 A1**
(43) Date of publication of application: **05.03.2025**
(21) Application number: 23796827.6
(22) Date of filing: 27.04.2023
(51) Int. Cl.: H04W 72/232, H04W 72/04, H04W 72/12, H04W 72/56, H04L 1/00, H04L 1/18, H04L 5/00

(54) **METHOD AND APPARATUS FOR TRANSMITTING OR RECEIVING SIGNAL IN WIRELESS COMMUNICATION SYSTEM**

(30) Priority: 27.04.2022 KR 20220052008; 10.08.2022 KR 20220100227; 16.02.2023 KR 20230021057
(71) Applicant: LG Electronics Inc., Yeongdeungpo-gu Seoul 07336 (KR)
(72) Inventor: KIM, Seonwook, Seoul 06772 (KR); YANG, Suckchel, Seoul 06772 (KR); KANG, Jiwon, Seoul 06772 (KR)
(74) Representative: Plasseraud IP
(86) International application number: PCT/KR2023/005759
(87) International publication number: WO 2023/211185

(57) **Abstract**

A method and apparatus for monitoring a signal in a wireless communication system, disclosed in the present specification, comprise receiving DCI for scheduling PDSCHs or PUSCHs on different cells. In detail, the DCI includes one or more DCI fields for the PDSCHs or PUSCHs on the different cells.

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

The object of the present disclosure is to provide a signal transmission and reception method for efficiently transmitting and receiving control and data signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for transmitting and receiving a signal in a wireless communication system.

According to an aspect of the present disclosure, a method of transmitting a signal by a user equipment (UE) in a wireless communication system includes receiving downlink control information (DCI) for scheduling physical downlink shared channels (PUSCHs) on different cells, and transmitting the PUSCHs on the different cells based on the DCI, wherein the DCI includes one demodulation reference signal (DMRS) sequence initialization field including common information for the PUSCHs, and a sequence of a DMRS associated with each PUSCH of the cells is generated based on the DMRS sequence initialization field.

According to an aspect of the present disclosure, a method of receiving a signal by a base station (BS) in a wireless communication system includes transmitting downlink control information (DCI) for scheduling physical downlink shared channels (PDSCHs) on different cells, and receiving the PUSCHs on the different cells based on the DCI, wherein the DCI includes one demodulation reference signal (DMRS) sequence initialization field including common information for the PUSCHs, and a sequence of a DMRS associated with each PUSCH of the cells is generated based on the DMRS sequence initialization field.

In another aspect of the present disclosure, an apparatus, a processor and a storage medium for performing the signal receiving method are provided. In addition, in another aspect of the present disclosure, an apparatus, a processor and a storage medium for performing the signal transmitting method are provided.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### Advantageous Effects

According to one embodiment of the present disclosure, when control and data signals are transmitted and received between communication devices, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIGS. 4 to 7 are diagrams illustrating methods for transmitting and receiving a signal according to the embodiments of the present disclosure.
FIGS. 8 to 11 illustrate devices according to an embodiment of the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

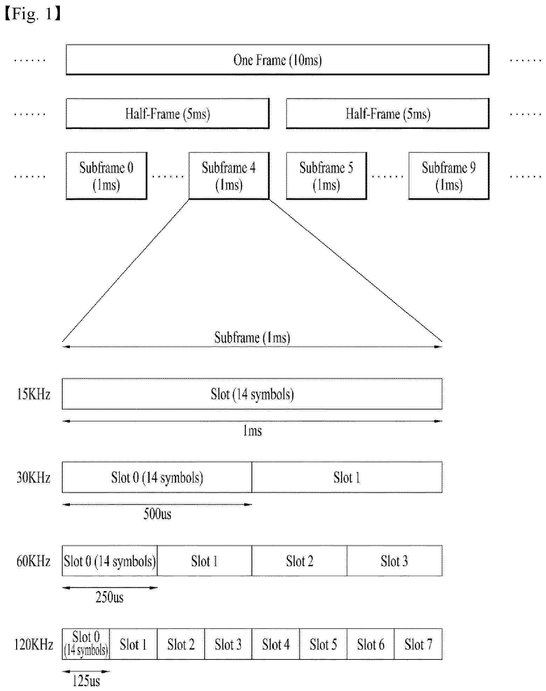

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transformspread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subrame,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

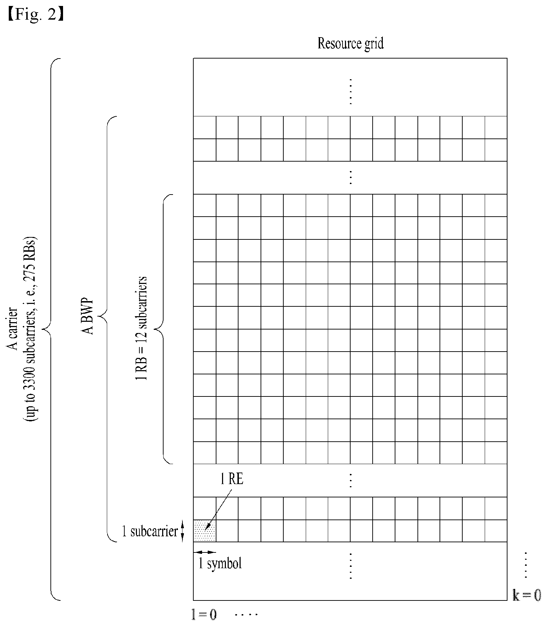

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

In the present disclosure, a base station (BS) may be, for example, a gNode B (gNB).

DCI for scheduling PDSCHs or PUSCHs on multiple serving cells

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

In a carrier aggregation (CA) situation in which a plurality of cells are configured, a multi-cell scheduling (multi-CC scheduling) method that simultaneously schedules a plurality of serving cells/CCs through a single DCI (based on the justification as in Table 4) may be considered to reduce DCI overhead required for PDSCH/PUSCH scheduling. In the present disclosure, the expression 'scheduling a plurality of cells' may be understood as 'scheduling a PDSCH or PUSCH to be transmitted in each of the plurality of cells'. In other words, multi-cell DCI is DCI for scheduling PDSCHs or PUSCHs on multiple different cells.

Table 4 shows justification for supporting DCI for this purpose, and may be understood as one of the motivations for introducing such DCI (PDCCH).

**[Table 4]**

| |
|---|
| NR supports a wide range of spectrum in different frequency ranges. It is expected that there will be increasing availability of spectrum in the market for 5G Advanced possibly due to re-farming from the bands originally used for previous cellular generation networks. Especially for low frequency FR1 bands, the available spectrum blocks tend to be more fragmented and scattered with narrower bandwidth. For FR2 bands and some FR1 bands, the available spectrum can be wider such that intra-band multi-carrier operation is necessary. To meet different spectrum needs, it is important to ensure that these scattered spectrum bands or wider bandwidth spectrum can be utilized in a more spectral/power efficient and flexible manner, thus providing higher throughput and decent coverage in the network. |
| One motivation is to increase flexibility and spectral/power efficiency on scheduling data over multiple cells including intra-band cells and inter-band cells. The current scheduling mechanism only allows scheduling of single cell PUSCH/PDSCH per a scheduling DCI. With more available scattered spectrum bands or wider bandwidth spectrum, the need of simultaneous scheduling of multiple cells is expected to be increasing. To reduce the control overhead, it is beneficial to extend from single-cell scheduling to multi-cell PUSCH/PDSCH scheduling with a single scheduling DCI. Meanwhile, trade-off between overhead saving and scheduling restriction has to be taken into account. |

In this regard, a discussion called 'multi-carrier enhancement' is underway, which is to specify a method of scheduling PUSCHs or PDSCHs on multiple serving cells through a single DCI.

The present disclosure proposes a scheduling method using a DCI field with a changed structure compared to a conventional DCI field to more efficiently perform an operation of scheduling PUSCHs or PDSCHs on multiple serving cells through a single DCI. In more detail, more efficient scheduling methods are proposed by changing DCI fields related to multiple-input and multiple-output (MIMO).

In the present disclosure, a DCI that simultaneously schedules PUSCHs (or PDSCHs) on (one or) multiple serving cells is referred to as 'm-CC DCI or multi-cell DCI'. A DCI that has a conventional DCI format and schedules PUSCHs (or PDSCHs) on a single serving cell is referred to as 's-CC DCI or single-cell DCI'. m-CC DCI may be distinguished from the existing s-CC DCI through the DCI format, RNTI, or indicator field within the DCI.

PUSCH (or PDSCH) for different numbers/combinations of serving cells may be scheduled through one m-CC DCI. For example, only serving cell #1 may be scheduled via m-CC DCI, serving cell #1/2 may be scheduled, or serving cell #1/2/3 may be scheduled. These numbers/combinations may be distinguished by specific fields in the DCI or by RNTI.

A case in which only PUSCH (or PDSCH) on one cell is scheduled through m-CC DCI may be referred to as an 's-CC scheduling case'. A case in which PUSCHs (or PDSCHs) on multiple cells are scheduled may be referred to as an 'm-CC scheduling case'.

Even for one UE, channel conditions for respective cells may be different from each other, and thus the number of (MIMO transmission) layers to be applied to each PDSCH or PUSCH may vary. However, to provide maximum flexibility, when all DCI fields indicating information for each cell are included in the DCI, a payload size of the m-CC DCI may increase significantly. In particular, a compact DCI field configuration may be required to simultaneously schedule three or more cells. Therefore, configuration methods for the following fields (to reduce the DCI payload size) related to MIMO operation from among the fields included in m-CC DCI are proposed.
- 'Antenna ports' field
- 'DMRS sequence initialization' field
- Fields indicating association between PTRS and DMRS (e.g., 'PTRS-DMRS association' field, 'Second PTRS-DMRS association' field)

Multiple CCs that are simultaneously scheduled via m-CC DCI (or multiple CCs to be scheduled via m-CC DCI) are defined as co-scheduled CCs. The corresponding co-scheduled CCs (and CCs belonging thereto) may be grouped into one or more sub-groups. Separate fields may be configured for each sub-group. CCs belong within each sub-group may be preconfigured by higher layer signaling. Each field (a value indicated therethrough) may be commonly applied to CC(s) belonging to a sub-group. A sub-group may be referred to as a shared CC group. A method of commonly applying a DCI field to corresponding CCs belonging to the shared CC group when the attributes of the CCs are different is proposed.

Table 5 shows that each field constituting m-CC DCI (i.e., DCI format 0_X/1_X) is classified into three types. DCI format 0_X is a DCI format for scheduling PUSCHs on multiple cells, and DCI format 1_X is a DCI format for scheduling PDSCHs on multiple cells. Type-1 is divided into three sub-types.

**[Table 5]**

| |
|---|
| For discussing field design of DCI format 0_X/1_X which schedules more than one cell, reformulate the types of DCI fields as below: |
| - Type-1 field: |
| -- Type-1A field: A single field indicating common information to all the co-scheduled cells |
| -- Type-1B field: A single field indicating separate information to each of co-scheduled cells via joint indication |
| -- Type-1C field: A single field indicating an information to only one of co-scheduled cells |
| - Type-2 field: Separate field for each of the co-scheduled cells |
| - Type-3 field: Common or separate to each of the co-scheduled cells, or separate to each sub-group, dependent on explicit configuration. |
| Note: One sub-group comprises a subset of co-scheduled cells where a single field is commonly applied to the co-scheduled cell(s) belonging to a same sub-group. |

Corresponding to respective types in Table 5, the terms described in the present disclosure are the same as Methods 1 to 4.

### Method 1: Shared-cell-common

Method in which only one field is configured within a multi-cell DCI and a value indicated by the DCI field is commonly applied to all cells (scheduled through the multi-cell DCI).

### Method 2: Shared-state-extension

Method in which only one field is configured within a multi-cell DCI, and each of the multiple states to be indicated by a DCI field is configured/set by a combination of multiple pieces of information about multiple cells (not information about a single cell).

### Method 3: Separate

Method in which a number of fields (within the DCI) equal to the number of cells scheduled through multi-cell DCI (with an operation configured according to the corresponding DCI field instruction) is configured, a separate field corresponds to each of the scheduled cells, and a value indicated by the corresponding field is applied to the corresponding cell.

### Method 4: Shared-reference-cell

Method in which only one field is configured within multi-cell DCI, a value indicated by the corresponding DCI field is applied only to a specific reference cell (e.g., a cell to which the corresponding DCI is transmitted, a cell with the lowest or highest cell index, or a cell indicated by a CIF field value) (from among cells that are scheduled through multi-cell DCI and for which an operation is configured according to indication of the corresponding DCI field), and a specific default value predefined/configured is applied to the remaining cells.

Basically, a field to which the shared-cell common method is applied may correspond to Type-1A field. A field to which the shared-state-extension method is applied may correspond to Type-1B field. A field to which the shared-reference-cell method is applied may correspond to Type-1C field. A field to which the separate method is applied may correspond to Type-2 field. A field in which it is possible to change whether Method 1, 2, 3, or 4 is to be applied by by explicit setting may correspond to Type-3 fields.

The description of multi-cell scheduling for PDSCH in the present disclosure may be equally applied to multi-cell scheduling for a PUSCH. The description of a multi-cell scheduling operation for a PUSCH may be equally applied to multi-cell scheduling for a PDSCH. A part described as 'cell' in the present disclosure may also be interpreted as an (active) BWP set/indicated in the corresponding cell.

A reference cell may mean (i) a cell with the lowest (or highest) cell index, (ii) a cell with the earliest (or latest) indicated PDSCH/PUSCH transmission starting symbol time, (iii) a cell with the earliest (or latest) indicated PDSCH/PUSCH transmission ending symbol time, (iv) a cell indicated by a CIF field value, or (v) a cell predetermined via RRC within a combination of cells (co-scheduled cell set or each cell subgroup) that are simultaneously scheduled through the same multi-cell DCI.

When there are multiple cells with the earliest (or latest) PDSCH/PUSCH start symbol time, a cell with the lowest (or highest) cell index from among the multiple cells may be a reference cell. When there are multiple cells with the earliest (or latest) PDSCH/PUSCH end symbol time, a cell with the lowest (or highest) cell index from among the multiple cells may be a reference cell.

Alternatively, the reference cell may refer to (i) a cell with the lowest (or highest) cell index within a set of all cells schedulable via any multi-cell DCI (i.e., schedulable cell set), (ii) a cell indicated by a CIF field value, (iii) a cell to which the multi-cell DCI is transmitted, or (iv) a cell predetermined via RRC.

For fields to which the shared-reference-cell method, the shared-cell-common method, and/or the shared-state-extension method are applied, only one field may be configured within the multi-cell DCI (i.e., commonly applied to all cells belonging to the co-scheduled cell set).

Alternatively, for fields to which the shared-reference-cell method, the shared-cell-common method, and/or the shared-state-extension method are applied, all cells belonging to the co-scheduled cell combination may be grouped into one or more (or multiple) sub-groups, and one (commonly applied) field may be configured for each sub-group. Therefore, separate/independent fields may be configured between the respective sub-groups. Therethrough, the shared-reference-cell method, the shared-cell-common method, and/or the shared-state-extension method and the field/information configuration/instruction method based thereon may be applied for each subgroup.

Alternatively, for fields to which the shared-reference-cell method, the shared-cell-common method, and/or the shared-state-extension method are applied, all cells belonging to the schedulable cell set may be grouped into one or more (or multiple) sub-groups, and one (commonly applied) field may be configured for each sub-group. Therefore, separate/independent fields may be configured between the respective sub-groups. Therethrough, the shared-reference-cell method, the shared-cell-common method, and/or the shared-state-extension method and the field/information configuration/instruction method based thereon may be applied for each subgroup.

A sub-group may also be referred to as a cell subgroup. A cell subgroup may be cofnigured/set with a specific one or a specific plurality of cells belonging to the co-scheduled cell combination or schedulable cell combination. For example, a cell subgroup may be configured/set with some or all of the cells belonging to a co-scheduled cell combination or a schedulable cell combination.

In the existing case, the DCI field to which the shared-cell common method is applied may be structured such that a table including one or more states for each cell is preconfigured via RRC or MAC-CE, and one of the states in the table is indicated through the DCI field. The conventional case refers to single-cell DCI-based scheduling. One or more states may include different parameters/values or a combination thereof and may correspond to row indices in each table. Therefore, the 'state' may be replaced with 'index'. From among the DCI fields, the PRB bundling size indicator, Rate matching (RM) indicator, ZP CSI-RS trigger, and SRS request fields correspond to this structure. The DCI field corresponding to this structure may operate based on one or more of the following three options. In the options below, the cell set may refer to a schedulable cell set, a co-scheduled cell set, or a cell subgroup.

Opt X) A specific state indicated through a DCI field that is commonly configured for a set of cells to which the shared-cell-common method is applied may be interpreted/applied (for each cell) as a parameter/value or a combination thereof corresponding to the state in a table configured for each cell belonging to the set of cells.

Opt Y) A specific state indicated through a DCI field that is commonly configured for a set of cells to which the shared-cell-common method is applied may be interpreted as a parameter/value or a combination thereof corresponding to the state in a table configured for a specific reference cell within the set of cells, and may be commonly applied to cells belonging to the set of cells.

Opt Z) A specific state indicated through a DCI field that is commonly configured for a set of cells to which the shared-cell-common method is applied may be commonly applied to cells belonging to the set of cells by being interpreted as a parameter/value or a combination thereof corresponding to the state in the common table, in a state in which a separate common table to be commonly applied to the set of cells is preconfigured via RRC/MAC-CE.

### [Common-T1A: Invalid state handling]

First, the Type-1Afield or the shared-cell-common method (specifically the Opt X method) is proposed below in more detail.

First, in the existing s-CC DCI-based scheduling, for a specific DCI field when one of the N states is indicated through the corresponding DCI field in a state in which N parameters/values or a combination thereof are preconfigured via RRC or MAC-CE for each of N states to be indicated by the corresponding DCI field, the UE performs a PDSCH/PUSCH transmission/reception operation by applying the parameters/values or a combination thereof configured for the indicated state. In this case, the size of the DCI field may be determined as ceil {log₂(N)} bits (or K bits). Here, the N (or K) value may be configured to a different (or the same) value for each cell.

For the specific DCI field in m-CC DCI-based scheduling, when parameters/values or a combination thereof are preconfigured for each state (applicable to s-CC DCI-based scheduling) for each cell as described above, if a specific state is indicated through the DCI field, the UE may perform transmission/reception operations for the PDSCH/PUSCH scheduled for each cell by interpreting/applying the parameters/values or a combination thereof set for each cell for the indicated state, respectively.

In m-CC DCI-based scheduling, the size of the specific DCI field may be determined by one of the following three methods by using N_max, which is the maximum value, and N_min, which is the minimum value, from among the N values set for each cell belonging to the set of all schedulable cells (or each co-scheduled cell set).
Alt-A) Determined by ceil {log₂(N_max)} bits based on the maximum value N_max (in this case, it may be a structure in which up to (the first) N_max states/indexes are indicated through the DCI field)
Alt-B) Determined by ceil {log₂(N_min)} bits based on the minimum value N_min (in this case, it may be a structure in which only up to (the first) N_min states/indexes are indicated through the DCI field)

When the Alt-A method or the Alt-C method is applied, if a specific state (e.g., a state higher than {N_low - 1}) is indicated through a specific DCI field for a specific cell (e.g., a cell in which N is set to N_low, which is a value less than N_max), a parameter/value or a combination thereof configured for the corresponding state may not exist for cell X. Considering this case, the following operation is proposed. For convenience, M = ceil {log₂ (N_max)} and K = ceil {log₂(N_low)} (M ≥ K) are defined. Specifically, for the Antenna ports field of the precoding information and number of layers, a state corresponding to the Reserved value may or may not be included in N_max / N_low. In the following description, values of the DCI fields corresponding to N states/indexes are assumed to be 0, ..., N-1.
1) Alt 1: For the cell X, only the first K (MSB) bits or the last K (LSB) bits from among the M bits in the DCI field are interpreted and applied.
   A. When a state/index with a value higher than {N_low - 1} is indicated through the K bits, the operation of Alt 3 or Alt 6 may be applied.
   B. For example, for the Antenna ports field, when M=5 and K allocated for cell X is K=4, the SRI field may be interpreted using only the first or last 4 bits out of 5 bits.
2) Alt 2: When a state higher than {N_low - 1} is indicated through the DCI field above, a specific parameter/value or a combination thereof separately preconfigured/predefined for the cell X is applied.
   A. The specific parameter/value or combination thereof may be configured/defined as a specific parameter/value or combination thereof linked to a specific one (e.g. lowest or highest) value from among the N_low states preconfigured for the cell X.
   B. For example, for the Antenna ports field, the specific parameter/value or a combination thereof may be configured/defined as a specific SRS resource index linked to a specific one (e.g. lowest or highest) of the N_low states preconfigured for the cell X, or a specific SRS resource index (e.g. lowest/highest index) linked to a specific L_max value (e.g. lowest/highest L_max).

Alt 3: When a state/index with a value higher than {N_low - 1} is indicated through the DCI field, it is considered that there is no PDSCH/PUSCH scheduling for the cell X.
A. Accordingly, the UE may omit PDSCH/PUSCH transmission and reception operations on the corresponding cell X (in the case of PDSCH, the corresponding HARQ-ACK is fed back as NACK).
B. For example, when a state higher than {N_low - 1} is indicated for the Antenna ports field, the UE may consider that there is no PUSCH/SRS scheduling for the cell X and may omit PUSCH/SRS transmission/reception operations on the cell X.

4) Alt 4: For the cell X, {N_max - N_low} = N_gap parameters/values or a combination thereof corresponding to each state from N_low to N_max - 1 may be additionally configured and applied.
A. The additional parameters/values or combinations thereof may be configured as additional parameters/values or combinations thereof linked to specific N_gap states from among the N_low states preconfigured for the cell X.
B. For example, for the Antenna ports field, SRS resource(s) linked to a specific state from among the preset N_low states may be mapped to N_gap states.

5) Alt 5: For the cell X, this may be interpreted and applied as a state corresponding to the value obtained by performing modulo-N_low operation on the state indicated by the DCI field.
A. For example, when N_low = 5 and N_max = 8, each state {0,1,2,3,4,5,6,7} indicated by the DCI field may be interpreted/applied as state {0,1,2,3,4,0,1,2} for the cell X, respectively.
B. For example, for the Antenna ports field of the precoding information and number of layers, if N_low = 5 and N_max = 8, each state {0,1,2,3,4,5,6,7} indicated by the DCI field may be interpreted/applied as state {0,1,2,3,4,0,1,2} for the cell X, respectively.

Alt 6: When a state/index with a value higher than {N_low - 1} is indicated through the DCI field, the most recently indicated state for the cell X may be applied/maintained.
A. Accordingly, the UE may perform PDSCH/PUSCH transmission/reception operations on the cell X by applying/maintaining the recently instructed state to the cell X.
B. For example, in the case of the Antenna ports field, the UE may perform PUSCH/SRS transmission/reception operations on the cell X by applying/maintaining the recently indicated SRI value (via the SRI field in the same DCI format or a different DCI format) to the cell X.

### [Common-T2: Field size determination]

The following is a specific proposal for a method of determining the DCI field size for Type-2 field or a field to which the separate method is applied.

In the case of a specific DCI field in the existing s-CC DCI field, when N states are to be indicated through the DCI field, the size of the DCI field may be configured to L = ceil {log2(N)} bits. L may be configured to a different (or the same) value for each cell. The specific DCI fields may include Antenna ports fields and a PTRS-DMRS association field.

When the specific DCI field in the m-CC DCI is configured based on Type-2 field method, for each of the multiple (e.g., N_co) co-scheduled cell combinations configured in the entire schedulable cell combination, the sum L_sum of the L values configured for each cell belonging to the co-scheduled cell combination is calculated. For each of the N_co co-scheduled cell combinations, the maximum of the N_co L_sum values calculated may be determined as the size of the corresponding specific DCI field (configured within the m-CC DCI).

For example, for the Antenna ports field, for each of the multiple (e.g., N_co) co-scheduled cell combinations configured in the entire schedulable cell combination, the sum L_sum of the L values (for the Antenna ports field) configured in each of the cells belonging to the co-scheduled cell combination is calculated. For each of the N_co co-scheduled cell combinations, the maximum of the N_co L_sum values calculated may be determined as the size of the corresponding Antenna ports field (configured within the m-CC DCI).

For example, for the PTRS-DMRS association field, for each of multiple (e.g., N_co) co-scheduled cell combinations (in particular, cells with CB-based UL set) configured in the entire fully schedulable cell combination, the sum L_sum of the L values (for the PTRS-DMRS association field) configured for each of the cells (in particular, cells with CB-based UL set) belonging to the corresponding co-scheduled cell combination is calculated. For each of the N_co co-scheduled cell combinations, the maximum of the N_co L_sum values calculated may be determined as the size of the PTRS-DMRS association field (configured within the m-CC DCI).

### [Configure table size for m-CC DCI (reduced than s-CC DCI)]

For a specific DCI field (Antenna ports, PTRS-DMRS association field, and the like) to which Type-2 field design method is applied, N_cfg states to be indicated through the corresponding DCI field in the m-CC DCI and the corresponding field size L_cfg = ceil {log₂(N_cfg)} may be separately configured. In this case, it may be configured in the form N_cfg < N and/or L_cfg < L. Type-2 field design method may include a shared-cell common method based on the DCI field size determination method and/or the Opt X method. N_cfg states and corresponding field sizes L_cfg may be configured for each cell.

In detail, for a specific DCI field within the m-CC DCI as described above, when N_cfg states and field size L_cfg are separately configured for a specific cell, Type-2 field design method is applied to the cell based on the number/set of states and the field size. When there is no separate settings, Type-2 field design method may be applied based on the N states and field size L configured in s-CC DCI.

For example, for the Antenna ports field, the number of DM-RS symbols for m-CC DCI purposes, the maximum number of ranks/layers, or valid/invalid row index(es) from among rows of a table corresponding to the corresponding cell may be defined/configured/indicated for a specific cell X. When configuring the Antenna ports field in the m-CC DCI and/or scheduling multiple CCs through the m-CC DCI, N_cfg states and field size L_cfg may be determined for the corresponding cell based on a given number of DM-RS symbols, a maximum number of ranks/layers, or valid/invalid row index(es) from among the rows of the table corresponding to the corresponding cell. When configuring the Antenna ports field in m-CC DCI and/or scheduling multiple CCs through m-CC DCI, for a cell for which the number of DM-RS symbols, the maximum number of ranks/layers, or valid/invalid row index(es) from among the rows of the table corresponding to the corresponding cell are not defined/configured/indicated, the Antenna ports field in the m-CC DCI for the cell may be configured based on the N states configured in the s-CC DCI and the field size L.

### 'Antenna port' field

Table 6 shows the Antenna ports fields for each DCI format disclosed in the 3GPP TS 38.212 document.

**[Table 6]**

| | |
|---|---|
| | For DCI format 0_1, |
| - Antenna ports - number of bits determined by the following | |
| | - 2 bits as defined by Tables 7.3.1.1.2-6, if transform precoder is enabled, *dmrs-Type=1,* and *maxLength*=1, except that *dmrs-UplinkTransformPrecoding* and *tp-pi2BPSK* are both configured and π/2 BPSK modulation is used; |
| | - 2 bits as defined by Tables 7.3.1.1.2-6A, if transform precoder is enabled and *dmrs-UplinkTransformPrecoding* and *tp-pi2BPSK* are both configured, π/2 BPSK modulation is used, *dmrs-Type=1,* and *maxLength*=1, where n_{SCID} is the scrambling identity for antenna ports defined in [Clause 6.4.1.1.1.2, TS38.211]; |
| | - 4 bits as defined by Tables 7.3.1.1.2-7, if transform precoder is enabled, *dmrs-Type=1,* and *maxLength=2,* except that *dmrs-UplinkTransformPrecoding* and *tp-pi2BPSK* are both configured and π/2 BPSK modulation is used; |
| | - 4 bits as defined by Tables 7.3.1.1.2-7A, if transform precoder is enabled and *dmrs-UplinkTransformPrecoding* and *tp-pi2BPSK* are both configured, π/2 BPSK modulation is used, *dmrs-Type=1,* and *maxLength*=2, where n_{SCID} is the scrambling identity for antenna ports defined in [Clause 6.4.1.1.1.2, TS38.211]; |
| | - 3 bits as defined by Tables 7.3.1.1.2-8/9/10/11, if transform precoder is disabled, *dmrs-Type*=1, and *maxLength*=1, and the value of rank is determined according to the SRS resource indicator field if the higher layer parameter *txConfig = nonCodebook* and according to the Precoding information and number of layers field if the higher layer parameter *txConfig = codebook*; |
| | - 4 bits as defined by Tables 7.3.1.1.2-12/13/14/15, if transform precoder is disabled, *dmrs-Type*=1, and *maxLength*=2, and the value of rank is determined according to the SRS resource indicator field if the higher layer parameter *txConfig = nonCodebook* and according to the Precoding information and number of layers field if the higher layer parameter *txConfig = codebook*; |
| | - 4 bits as defined by Tables 7.3.1.1.2-16/17/18/19, if transform precoder is disabled, *dmrs-Type*=2, and *maxLength*=1, and the value of rank is determined according to the SRS resource indicator field if the higher layer parameter *txConfig = nonCodebook* and according to the Precoding information and number of layers field if the higher layer parameter *txConfig = codebook*; |
| | - 5 bits as defined by Tables 7.3.1.1.2-20/21/22/23, if transform precoder is disabled, *dmrs-Type*=2, and *maxLength*=2, and the value of rank is determined according to the SRS resource indicator field if the higher layer parameter *txConfig = nonCodebook* and according to the Precoding information and number of layers field if the higher layer parameter *txConfig = codebook.* |
| | where the number of CDM groups without data of values 1, 2, and 3 in Tables 7.3.1.1.2-6 to 7.3.1.1.2-23 refers to CDM groups {0}, {0,1}, and {0, 1,2} respectively. |
| | If a UE is configured with both *dmrs-UplinkForPUSCH-MappingTypeA* and *dmrs-UplinkForPUSCH-MappingTypeB,* the bitwidth of this field equals max{*x_{A},x_{B}*}, where *x_{A}* is the "Antenna ports" bitwidth derived according to *dmrs-UplinkForPUSCH-MappingTypeA* and *x_{B}* is the "Antenna ports" bitwidth derived according to *dmrs-UplinkForPUSCH-MappingTypeB.* A number of \|*x_{A}-x_{B}*\| zeros are padded in the MSB of this field, if the mapping type of the PUSCH corresponds to the smaller value of *x_{A}* and *x_{B}.* |
| | For DCI format 1_1, |
| | - Antenna port(s) - 4, 5, or 6 bits as defined by Tables 7.3.1.2.2-1/2/3/4 and Tables 7.3.1.2.2-1A/2A/3A/4A, where the number of CDM groups without data of values 1, 2, and 3 refers to CDM groups {0}, {0,1}, and {0, 1,2} respectively. The antenna ports {*p*_{0,...,}*p*_{*υ-*1}} shall be determined according to the ordering of DMRS port(s) given by Tables 7.3.1.2.2-1/2/3/4 or Tables 7.3.1.2.2-1A/2A/3A/4A. When a UE receives an activation command that maps at least one codepoint of DCI field *'Transmission Configuration Indication'* to two TCI states, the UE shall use Table 7.3.1.2.2-1A/2A/3A/4A; otherwise, it shall use Tables 7.3.1.2.2-1/2/3/4. The UE can receive an entry with DMRS ports equals to 1000, 1002, 1003 when two TCI states are indicated in a codepoint of DCI field *'Transmission Configuration Indication'.* |
| If a UE is configured with both *dmrs-DownlinkForPDSCH-MappingTypeA* and *dmrs-DownlinkForPDSCH-MappingTypeB,* the bitwidth of this field equals max{*x_{A},x_{B}*}, where *x_{A}* is the "Antenna ports" bitwidth derived according to *dmrs-DownlinkForPDSCH-MappingTypeA* and *x_{B}* is the "Antenna ports" bitwidth derived according to *dmrs-DownlinkForPDSCH-MappingTypeB.* A number of \|*x_{A}-x_{B}*\| zeros are padded in the MSB of this field, if the mapping type of the PDSCH corresponds to the smaller value of *x_{A}* and *x_{B}*. | |

For the number of ranks/layers determined through the SRI and/or a field of precoding information and number of layers, the corresponding DM-RS port index for each layer may be determined through the corresponding field.

As one method of reducing the corresponding field size, the number of DM-RS symbols may be configured/applied differently depending on the number of cells that m-CC DCI schedules (simultaneously). For example, in the s-CC scheduling case, even if a maxLength value follows a predefined/configured value for each cell, only single-symbol DM-RS may be constrained to be scheduled in the m-CC scheduling case. Alternatively, in the scheduling case based on m-CC DCI, only single-symbol DM-RS may be constrained to always be scheduled. Alternatively, a configuration constraint may be imposed such that a maxLength value is always configured to 1 for cells configured as m-CC DCI scheduling targets. In this case, a number of fields equal to the number of cells scheduled through m-CC DCI (for which an operation is cnofigured according to the corresponding DCI field instructions) are configured within the corresponding DCI. The Antenna ports field may be configured in such a way that each scheduled cell corresponds to a separate field and a value indicated by the corresponding field is applied to the corresponding cell. This method of configuring fields is referred to as the "Type-2 field design method".

There may be a disadvantage in that a CDM capacity is reduced if the number of DM-RS symbols per cell is restricted. In consideration of this, a separate table and separate fields corresponding to each cell may be configured for each cell, and a DM-RS port index for each layer may be indicated for each cell through the separate fields. A method for reducing the total number of bits required for DM-RS port index indication for each layer by adjusting the number of rows of the table for each cell may be considered.

For example, when specific conditions (if transform precoder is disabled, dmrs-Type=2, maxLength=2, rank=1) are satisfied as shown in Table 7, signaling for 28 combinations is required. However, when the corresponding cell is scheduled through m-CC DCI, the table may be configured with only some of the 28 rows corresponding to the 28 combinations. This may reduce the number of bits required to configure/indicate the 'Antenna ports' field/information for the corresponding cell. For example, if only 8 rows out of 27 are selected, only 3 bits instead of 5 bits are needed to indicate the layer-specific DM-RS port index for the corresponding cell.

In this case, for each cell, only which row indexes from among the rows of the existing table are selected to reduce the table size and bits may be separately or predefined. For example, only even row indices may be selected, only indices that are multiples of a specific value of N may be selected, only a specific number of the lowest indices may be selected, or only a specific number of the highest indices may be selected. Specifically, for a specific cell, 0 bit may be configured to be allocated for layer-specific DM-RS port index indication. In this case, a specific DM-RS port index may be applied to the corresponding cell. For example, a rule may be preconfigured such that the DM-RS port index is applied as 0 for the corresponding cell, or which DM-RS port index is to be used may be preconfigured.

The method may be applied differently (the size of the table may be different) depending on which cells are actually scheduled and may be applied only to the m-CC scheduling case and not to the s-CC scheduling case. For example, in the s-CC scheduling case, when a cell to which Table 7 below is applied is scheduled, a 5-bit Antenna ports field may be allocated for the corresponding cell. In this case, a number of fields equal to the number of cells scheduled through m-CC DCI (for which an operation is cnofigured according to the corresponding DCI field instructions) are configured within the corresponding DCI. The Antenna ports field may be configured in such a way that each scheduled cell corresponds to a separate field and the value indicated by the field is applied to the corresponding cell, and this field configuration method is referred to as a "Type-2 field design method".

**[Table 7]**

| **Value** | **Number of DMRS CDM group(s) without data** | **DMRS port(s)** | **Number of front-load symbols** |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| 28-31 | Reserved | Reserved | Reserved |

As another example, the maximum number of ranks/layers may be configured/applied differently depending on the number of cells that m-CC DCI schedules (simultaneously). For example, in the s-CC scheduling case, even if a maxRank value follows a predefined/configured value for each cell, the maxRank may be constrained to K in the m-CC scheduling case. Alternatively, in the scheduling case based on m-CC DCI, the maxRank value may always be constrained to K. Alternatively, a configuration constraint may be imposed such that a maxRank value is always configured to K for cells configured as m-CC DCI scheduling targets. The K value may be configured or predefined. For example, K=1. For a PDSCH, the constraint on the maxRank value may be applied only when only 1-TB is scheduled. For cells scheduled with 2-TB, no constraints on rank values may be applied. This is because, as shown in Table 8 below, in the case of 2-TB (i.e., both codewords are enabled), there are only 4 corresponding row indices, and thus even if the corresponding row indices are more than 4 due to the rank count constraint in the case of 1-TB, the number of bits in the corresponding Antenna ports field may not change. In this case, a number of fields equal to the number of cells scheduled through m-CC DCI (for which an operation is cnofigured according to the corresponding DCI field instructions) are configured within the corresponding DCI. The Antenna ports field may be configured in such a way that each scheduled cell corresponds to a separate field and a value indicated by the corresponding field is applied to the corresponding cell. This method of configuring fields is referred to as the "Type-2 field design method".

**[Table 8]**

| **One Codeword:** | | | | **Two Codewords:** | | | |
|---|---|---|---|---|---|---|---|
| **Codeword 0 enabled, Codeword 1 disabled** | | | | **Codeword 0 enabled, Codeword 1 enabled** | | | |
| **Value** | **Number of DMRS CDM group(s) without data** | **DMRS port(s)** | **Number of front-load symbols** | **Value** | **Number of DMRS CDM group(s) without data** | **DMRS port(s)** | **Number of front-load symbols** |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |
| 3 | 2 | 0 | 1 | 3 | 2 | 0,1,2,3,4,5,6,7 | 2 |
| 4 | 2 | 1 | 1 | 4-31 | reserved | reserved | reserved |
| 5 | 2 | 2 | 1 | | | | |
| 6 | 2 | 3 | 1 | | | | |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 2 | 0,2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0,1 | 2 | | | | |
| 21 | 2 | 2,3 | 2 | | | | |
| 22 | 2 | 4,5 | 2 | | | | |
| 23 | 2 | 6,7 | 2 | | | | |
| 24 | 2 | 0,4 | 2 | | | | |
| 25 | 2 | 2,6 | 2 | | | | |
| 26 | 2 | 0,1,4 | 2 | | | | |
| 27 | 2 | 2,3,6 | 2 | | | | |
| 28 | 2 | 0,1,4,5 | 2 | | | | |
| 29 | 2 | 2,3,6,7 | 2 | | | | |
| 30 | 2 | 0,2,4,6 | 2 | | | | |
| 31 | Reserved | Reserved | Reserved | | | | |

The m-CC DCI configuration method for the 'antenna ports' field proposed in the present disclosure may be applied to each of mapping type A and mapping type B when different mapping types (i.e., PDSCH/PUSCH mapping type A and B) are configured for scheduled cells and at least one parameter from among dmrs-Type and/or dmrs-AdditionalPosition and/or maxLength is configured differently for each mapping type. When a payload size corresponding to mapping type A is X_A and a payload size corresponding to mapping type B is X_B, a payload size of the final 'antenna ports' field may be |X_A-X_B| or (X_A+X_B).

Options 1-1 to 2-2C disclose a method of applying the 'Antenna ports' field when different CCs referencing different tables are grouped into a shared CC group when interpreting the 'Antenna ports' field.

First, a constraint may be placed on the settings such that only CCs of the same type belong to a shared CC group. That is, for all CCs belonging to a shared CC group, a common table is referenced when interpreting the 'Antenna ports' field. In this case, the same type of CC means that the Transform precoding configuration and/or the configuration for the dmrs-Type parameter and/or the configuration for the tp-pi2BPSK parameter and/or the configuration for the maxLength parameter (or at least one of these configurations) are the same. Which configurations need to be the same may differ depending on the case, such as a PDSCH and a PUSCH. In the case of the PUSCH, a constraint is added to ensure that CCs grouped into a shared CC group have the same transmission rank value, and thus the table referenced when interpreting the 'Antenna ports' field may be commonly aligned. In the case of the PDSCH, even if the configurations for the dmrs-Type parameter and the maxLength parameter are the same, the tables configured to be referenced by each CC may be different depending on whether spatial domain multiplexing (SDM) reception from multi-TRP is configured.

(Opt 1-1) In detail, whether the multi-TRP DL reception is configured may be restricted to only cells belonging to the shared CC group.

(Opt 1-2) Alternatively, CCs having different configurations for multi-TRP DL reception may be allowed to belong to a single shared CC group. In Opt 1-2, when a table referenced by a cell configured with a multi-TRP DL reception operation is referred to as Table X (e.g., Table 7.3.1.2.2-1A of TS 38.212 specification) and a table referenced by a cell configured with no multi-TRP DL reception operation is referred to as Table Y (e.g., Table 7.3.1.2.2-1 of TS 38.212 specification), a rule may be established in the m-CC scheduling case to commonly reference either Table X or Table Y for the corresponding shared CC group. In this case, when there is a different codepoint between table X or table Y, and when a specific codepoint is indicated, a cell for which multi-TRP DL reception operation is not configured performs PDSCH reception as if there is no PDSCH scheduling or as if the antenna port(s) preconfigured/defined are indicated. Alternatively, in Opt 1-2, a rule may be defined to refer only to Table Y (not only for cells in which a multi-TRP DL reception operation is not configured, but also for cells in which the multi-TRP DL reception operation is configured), and thus a cell in which the multi-TRP DL reception operation is configured may allow only single-TRP transmission when scheduling with m-CC DCI (or when multiple cells are scheduled simultaneously via m-CC DCI).

(Opt 2-1) As another method, CCs of different types (i.e. not of the same type described above) may be allowed to belong to a shared CC group. In this case, the 'Antenna ports' field configuration in the m-CC DCI is omitted (i.e., the field does not exist) and the codepoint required/applied to each CC in the group (in the 'Antenna ports' table) is restricted to 1. The corresponding codepoint may be preconfigured or indicated via MAC.

(Opt 2-2) The corresponding field and/or corresponding table is configured according to a specific CC of a specific type belonging to the shared CC group (parameters configured for single-cell scheduling of the CC and number of codepoints, or the like). CC(s) with a different type from a corresponding type may have a default codepoint applied. The default codepoint may be preconfigured or indicated via MAC.

(Opt 2-2A) For Opt 2-2, the number of codepoints to be indicated by the 'Antenna ports' field, which are required for the specific types of CCs, is configured to the same. For example, the 'Antenna ports' field may be configured based on the minimum number of codepoints configured for single cell-scheduling for each CC. In this case, for a CC with more codepoints configured than the minimum value (e.g. N), only the codepoints corresponding to the lowest or highest N indices may be indicated.

(Opt 2-2B) The 'Antenna ports' field may be configured based on the maximum number of codepoints configured for single cell scheduling for each CC. If the codepoint indicated through that field is not valid for a particular CC, then no scheduling is considered for that CC.

(Opt 2-2C) The 'Antenna ports' field is configured in the same manner as Opt 2-2B above, but if the indicated codepoint is not valid for a specific CC, the UE may operate to assume/apply a specific codepoint predefined/configured for the CC.

### 'DMRS sequence initialization' field

When a PUSCH is scheduled by s-CC DCI and CP-OFDM is applied (i.e., when transform precoder is disabled), 1 bit is allocated to the corresponding field. Alternatively, when a PUSCH is scheduled by s-CC DCI and DFT-s-OFDM is applied (i.e., when transform precoder is enabled), 0 bit is allocated to the corresponding field. On the other hand, when a PDSCH is scheduled by s-CC DCI, 1 bit is always allocated to the corresponding field.

The DMRS sequence initialization field is a Type-1A field, 1 bit is commonly allocated for cells scheduled (simultaneously) through m-CC DCI, and in the case of a PUSCH, 1 bit may be commonly allocated for cell(s) to which CP-OFDM is applied from among the corresponding cells. That is, a value of '0' or '1' indicated may be applied to all cells being scheduled (all cells to which CP-OFDM is applied in the case of a PUSCH).

For a PUSCH, if DFT-s-OFDM is applied to all cells to be scheduled through m-CC DCI, 0 bit may be assigned to the corresponding field. When CP-OFDM is applied to some of the cells to be scheduled via m-CC DCI and DFT-s-OFDM is applied to the remaining cells, 1 bit may be allocated to the corresponding field. When DFT-s-OFDM is applied to all actually scheduled cells, the corresponding field may not be present. Alternatively, if DFT-s-OFDM is applied to all actual scheduled cells, 1 bit is allocated to the corresponding field, but the corresponding bit may be considered as a reserved bit. Alternatively, a configuration constraint may be imposed that all cells with m-CC DCI configured have DFT-s-OFDM applied.

When M cells (which may refer to M CP-OFDM cells in the case of PUSCH) are to be scheduled, and the corresponding field is configured with less than K (<M) bits, 2^K (or less than 2^K) combinations of DM-RS sequence initialization methods of the M cells are preconfigured, and one of the combinations may be indicated through m-CC DCI. For example, in the case of a PDSCH, when M=4 and K=2, the DM-RS sequence initialization method of four cells is preconfigured for each case of '00' / '01' / '10' / '11'. When m-CC DCI indicates '00', the DM-RS sequence initialization method corresponding to the corresponding codepoint may be applied to each of the M cells.

As another method, for m-CC DCI, the corresponding field may not be present. In this case, a predefined/configured DM-RS sequence initialization method may be applied to each scheduled cell(s). This method (not configuring/indicating fields/information within m-CC DCI) may only be applied to m-CC scheduling case. In the s-CC scheduling case (or when CP-OFDM is applied to a single scheduled cell), a 1-bit field/information may be configured/indicated in the DMRS sequence initialization field.

Alternatively, with only one field configured in the m-CC DCI, DM-RS sequence initialization information may be indicated (through the field) only for a specific reference cell from among the cells scheduled through the corresponding DCI. For the remaining cells that are not reference cells, a predefined/configured DM-RS sequence initialization method may be applied.

Options 3-1 to 3-3 disclose a method of applying the 'DMRS sequence initialization' field when a CC configured with the 'DMRS sequence initialization' field and a CC(s) configured without the 'DMRS sequence initialization' field are grouped into a shared CC group.

(Opt 3-1) When a CC configured with the 'DMRS sequence initialization' field and a CC configured without the field are grouped into a shared CC group, the 'DMRS sequence initialization' field is omitted in the m-CC DCI (for the shared CC group) and n_SCID = 0 is always assumed/applied.

(Opt 3-2) When the 'DMRS sequence initialization' field is configured in the m-CC DCI and n_SCID = 1 is indicated, it is considered that there is no scheduling for CCs for which the 'DMRS sequence initialization' field is not configured.

(Opt 3-3) When the 'DMRS sequence initialization' field is configured in the m-CC DCI, n_SCID = 0 may always be applied for CCs in which the 'DMRS sequence initialization' field is not configured (even if n_SCID = 1 is indicated through the corresponding field).

In the case of DCI for PUSCH scheduling, it may be dynamically indicated which waveform from among CP-OFDM or DFT-s-OFDM is to be applied to the corresponding PUSCH. For example, one of two waveforms may be indicated by introducing a separate 1-bit indicator. One of the two waveforms may be indicated by utilizing some bits or some codepoints of an existing field. If a 1-bit indicator is introduced in the m-CC DCI, the indication for dynamic waveform switching (DWS) may be commonly applied to all co-scheduled CCs (or CC(s) configured with DWS from among co-scheduled CCs). Alternatively, the instruction for the dynamic waveform switching may be applied only to a specific reference cell, and a specific waveform may be applied to non-reference cells in a predefined/configured manner. The reference cell may be a cell with the lowest index, a cell with the highest index, a cell configured with the lowest SCS, a cell configured with the highest SCS, or a scheduling cell in which the m-CC DCI is transmitted. For m-CC DCI, the corresponding DWS instruction field may be omitted, and a specific waveform for each cell may be applied by a predefined/configured method. As such, when the DWS instruction is to be applied to only all or some of the co-scheduled CCs, the 'DMRS sequence initialization' field is interpreted only for the cells to which CP-OFDM is indicated/applied, and the 'DMRS sequence initialization' field may be disregarded for other cells.

### Fields indicating association between PTRS and DMRS

Table 9 shows fields indicating the association between PTRS and DMRS disclosed in the 3GPP TS 38.212 document.

**[Table 9]**

| | |
|---|---|
| - PTRS-DMRS association - number of bits determined as follows | |
| | - 0 bit if *PTRS-UplinkConfig* is not configured in either *dmrs-UplinkForPUSCH-MappingTypeA* or *dmrs-UplinkForPUSCH-MappingTypeB* and transform precoder is disabled, or if transform precoder is enabled, or if *maxRank*=1; |
| | - 2 bits otherwise, where Table 7.3.1.1.2-25/7.3.1.1.2-25A and 7.3.1.1.2-26 are used to indicate the association between PTRS port(s) and DMRS port(s) when one PT-RS port and two PT-RS ports are configured by *maxNrofPorts* in *PTRS-UplinkConfig* respectively, and the DMRS ports are indicated by the Antenna ports field. When the SRS resource set indicator field is present and *maxRank*>*2,* this field indicates the association between PTRS port(s) and DMRS port(s) corresponding to SRS resource indicator field and/or Precoding information and number of layers field according to Table 7.3.1.1.2-25 and 7.3.1.1.2-26. When the SRS resource set indicator field is present and equals "10" and "11" and *maxRank*=2, the MSB of this field indicates the association between PTRS port(s) and DMRS port(s) corresponding to SRS resource indicator and/or Precoding information and number of layers field, and the LSB of this field indicates the association between PTRS port(s) and DMRS port(s) corresponding to Second SRS resource indicator field and/or Second Precoding information field, according to Table 7.3.1.1.2-25A. |
| | If "Bandwidth part indicator" field indicates a bandwidth part other than the active bandwidth part and the "PTRS-DMRS association" field is present for the indicated bandwidth part but not present for the active bandwidth part, the UE assumes the "PTRS-DMRS association" field is not present for the indicated bandwidth part. |
| | - Second PTRS-DMRS association - 2 bits if PTRS-DMRS association field and SRS resource set indicator field are present and *maxRank>2*; 0 bit otherwise. Table 7.3.1.1.2-25 and 7.3.1.1.2-26 are used to indicate the association between PTRS port(s) and DMRS port(s) corresponding to Second SRS resource indicator field and/or Second precoding information field when one PT-RS port and two PT-RS ports are configured by *maxNrofPorts* in *PTRS-UplinkConfig* respectively, and the DMRS ports are indicated by the Antenna ports field. |

### <'PTRS-DMRS association' field>

If the condition that 0 bit is allocated to the field for all cells to be scheduled (simultaneously) via m-CC DCI (if PTRS-UplinkConfig is not configured in either dmrs-UplinkForPUSCH-MappingTypeA or dmrs-UplinkForPUSCH-MappingTypeB and transform precoder is disabled, or if transform precoder is enabled, or if maxRank=1) (for convenience, the condition is named Condition #A) is satisfied, 0 bit may be allocated to the field. When some of the cells to be scheduled via m-CC DCI satisfy condition #A and the remaining cells do not satisfy condition #A, 2 bits (or 1 bit in combination with the method below) may be allocated to the corresponding field. If the actual scheduled cells satisfy condition #A, the corresponding field may not be present. Alternatively, if the actual scheduled cells satisfy condition #A, 2 bits (or 1 bit in combination with the method below) are allocated to the corresponding field, but the 2 bits may be considered as reserved bits. Alternatively, a configuration constraint may be imposed such that all cells configured with m-CC DCI are configured to satisfy condition #A. Alternatively, the s-CC scheduling case may be constrained to satisfy condition #A only for cells scheduled in the m-CC scheduling case (e.g., maxRank = 1), without imposing any constraint on whether condition #A is satisfied.

As another method, in the case scheduled with m-CC DCI, the field size may be reduced by reducing the number of candidates for DM-RS port indices to be linked to PT-RS compared to the existing s-CC DCI. For example, PT-RS port 0 may be indicated by a field thereof to interface with one of the four DM-RS ports, as shown in Table 10 below. However, in m-CC DCI (or in m-CC scheduling case), PT-RS port 0 may be indicated by a field thereof to be associated with one of the two specific DM-RS ports (e.g., 1^{st} scheduled DMRS port or 2^{nd} scheduled DMRS port). In this case, for each cell scheduled through the same m-CC DCI, only 1 bit may be required in the 'PTRS-DMRS association' field for the corresponding cell, instead of 2 bits. Alternatively, to further reduce the number of bits in the corresponding field, in the case scheduled with m-CC DCI (or in the case of m-CC scheduling), which DM-RS port is associated with which PT-RS port may be preconfigured or defined, and the 'PTRS-DMRS association' field for the cell may not be allocated.

In the case of scheduling with m-CC DCI (or in the case of m-CC scheduling), the number of bits of the 'PTRS-DMRS association' field corresponding to each cell may be configured to be the same by commonly applying one of the methods to cells scheduled through the same m-CC DCI. Alternatively, the number of bits in the 'PTRS-DMRS association' field may be different for each cell by applying different methods from among the methods to cells scheduled through the same m-CC DCI. For example, in the m-CC scheduling case, 2 bits may be allocated to the corresponding field as before for a specific reference cell, and 0 bit may be allocated to the corresponding field for other scheduled cell(s). A reference cell may be defined and/or configured as a cell with the lowest cell index, a cell with the highest cell index, a cell with the lowest SCS set, a cell with the highest SCS set, a scheduling cell in which m-CC DCI is transmitted, a cell with the minimum number of SRS resources in an SRS resource set, or a cell with the maximum number of resources in an SRS resource set. For cells in which 0 bit is assigned to the corresponding field, a constraint may be preconfigured that which DM-RS port is associated with which PT-RS port, or that condition #A is satisfied. As another example, in the s-CC scheduling case, 2 bits are allocated to the field as before, and in the m-CC scheduling case, the proposed methods (including the 0 bit allocation method) may be applied commonly or differently to multiple cells.

**[Table 10]**

| Value | DMRS port |
|---|---|
| 0 | 1^{st} scheduled DMRS port |
| 1 | 2^{nd} scheduled DMRS port |
| 2 | 3^{rd} scheduled DMRS port |
| 3 | 4^{th} scheduled DMRS port |

Options 4-1 to 4-3 disclose a method of applying the 'PTRS-DMRS association' field when a CC configured with the 'PTRS-DMRS association' field and a CC(s) configured without the 'PTRS-DMRS association' field are grouped into a shared CC group.

(Opt 4-1) When a CC configured with the 'PTRS-DMRS association' field and a CC configured without the field are grouped into a shared CC group, the 'PTRS-DMRS association' field is omitted in the m-CC DCI (for the shared CC group) and a specific default DMRS port (index) is always assumed/applied. The default DMRS port may be, for example, '0 or 1^{st} scheduled DMRS port'.

(Opt 4-2) If the 'PTRS-DMRS association' field is configured in the m-CC DCI and the field indicates a state of 0 (or only bit '0'), the specific default DMRS port is assumed/applied for CCs for which the 'PTRS-DMRS association' field is not configured. If a non-zero state (or at least one bit '1') is indicated, no scheduling is considered for the unconfigured CC.

(Opt 4-3) For CCs in which the 'PTRS-DMRS association' field is configured in the m-CC DCI and the 'PTRS-DMRS association' field is not configured, a specific DMRS port (index) is always assumed/applied according to the configuration, regardless of the state (or bit) indicated through the corresponding field. The default DMRS port may be, for example, '0 or 1^{st} scheduled DMRS port'.

As another example, in options 5-1 and 5-2, only CCs configured with the 'PTRS-DMRS association' field are grouped into a shared CC group, but a method of applying the 'PTRS-DMRS association' field in a case in which a shared CC group is grouped between a CC configured with one PTRS port and a CC configured with two PTRS ports is proposed.

(Opt 5-1) Specifically, for a CC configured with one PTRS port, the UE may interpret/apply the 'PTRS-DMRS association' field only as state 0/1 by referring only to the MSB (most significant bit) of the 'PTRS-DMRS association' field. Alternatively, for a CC configured with one PTRS port, the specific default DMRS port may always be fixed and used.

(Opt 5-2) The 2^{nd} (or conversely, 1^{st}) PTRS port of a CC configured with two PTRS ports is fixed to a specific DMRS port. The UE may interpret/apply the 'PTRS-DMRS association' field to the associated DMRS port by referring to the MSB or least significant bit(LSB) of the 'PTRS-DMRS association' field for the 1^{st} (or conversely, 2^{nd}) PTRS port. Alternatively, for the 1^{st} (or conversely, 2^{nd}) PTRS port, the specific default DMRS port may always be fixed and used. In Opt 5-2, the remaining bits that are not used in the 1^{st} (or 2^{nd}) PTRS port indication of a CC configured with two PTRS ports may be used for PTRS configuration of a CC configured with one PTRS port.

As another method, a configuration may be restricted such that only CCs configured with the same number of PTRS ports are grouped into a shared CC group (i.e., CCs configured with different numbers of PTRS ports are not grouped into a shared CC group).

### <'Second PTRS-DMRS association' field >

The corresponding field may not be present in m-CC DCI. Alternatively, the corresponding field may exist only in the s-CC scheduling case and not in the m-CC scheduling case. Even in the s-CC scheduling case, if the multi-TRP UL operation is not configured for the corresponding scheduled cell, the corresponding field may be defined not to be present. For example, in the s-CC scheduling case, when the DCI schedules only cells configured with multi-TRP UL operation, the corresponding field may be specified to be present.

Alternatively, when the second SRS resource set is indicated to be valid on a cell scheduled through an m-CC scheduling case or an s-CC scheduling case (by the method) but the corresponding field does not exist, the association between the PT-RS and DM-RS ports for the corresponding cell may be predefined/configured or updated through a MAC CE or the like. As one method, the UE may consider that the association between the same PT-RS port and DM-RS port is indicated (for the corresponding cell) in the 'PTRS-DMRS association' field. Alternatively, it may be preconfigured/defined which PT-RS port and DM-RS port associations are to be applied to which the second SRS resource set.

The m-CC DCI configuration method for fields indicating association between the PTRS and the DMRS proposed in the present disclosure may be applied to each of mapping type A and mapping type B when different mapping types (i.e., PDSCH/PUSCH mapping type A and B) are configured for scheduled cells and at least one parameter from among dmrs-Type and/or dmrs-AdditionalPosition and/or maxLength is configured differently for each mapping type. When a payload size corresponding to mapping type A is X_A and a payload size corresponding to mapping type B is X_B, a final payload size of a field indicating the association between the PTRS and the DMRS may be |X_A-X_B| or (X_A+X_B).

In Options 6-1 and 6-2, a method of applying the 'Second PTRS-DMRS association' field when CCs configured with a multi-TRP UL operation and CC(s) configured without multi-TRP UL operation are grouped into a shared CC group is proposed.

(Opt 6-1) When CCs configured with multi-TRP UL operation and CCs configured without multi-TRP UL operation are grouped into a shared CC group, the corresponding field configuration in the m-CC DCI may be omitted and the operation (related to the association between PTRS and DMRS) for CC(s) configured with multi-TRP UL operation may be predefined or indicated by MAC CE. Alternatively, a value indicated via the 'PTRS-DMRS association' field may be applied equally to the second TRP.

(Opt 6-2) The corresponding field may be present or configured in the m-CC DCI, but may be disregarded for CCs for which the multi-TRP UL operation is not configured.

The contents of the present disclosure are not limitedly applied only to UL and/or DL signal transmission and reception. For example, the contents of the present disclosure may also be used for direct communication between UEs. In this document, the term based station (BS) may be understood as a concept including a relay node as well as a BS. For example, the operations of a BS described in the present disclosure may be performed by a relay node as well as the BS.

It is obvious that each of the examples of the proposed methods may also be included as one implementation method of the present disclosure, and thus each example may be regarded as a kind of proposed method. Although the above-described proposed methods may be implemented independently, some of the proposed methods may be combined and implemented. In addition, it may be regulated that information on whether the proposed methods are applied (or information on rules related to the proposed methods) is transmitted from the BS to the UE in a predefined signal (e.g., physical layer signaling or higher layer signaling).

### Implementation examples

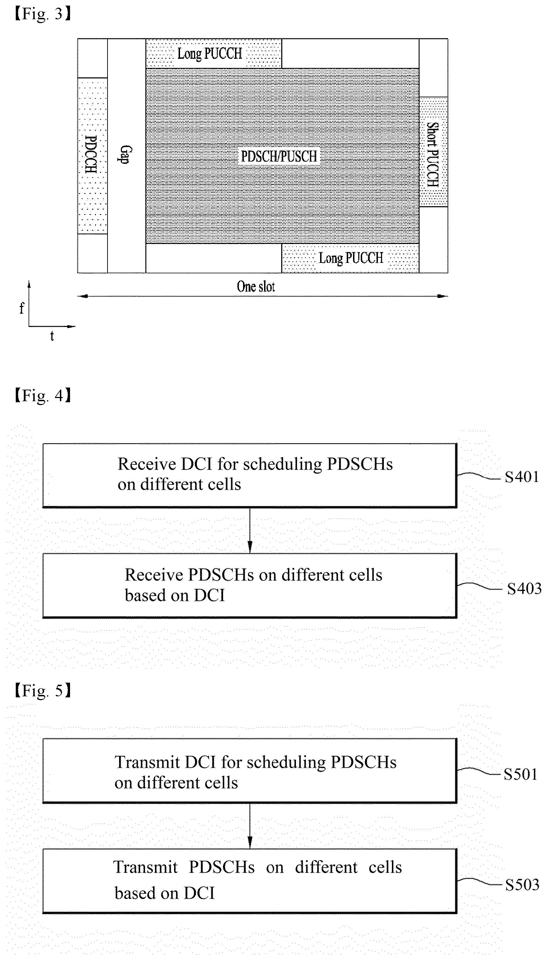

FIG. 4 and FIG. 5 are flowcharts of a signal transmission and reception method according to embodiments of the present disclosure.

Referring to FIG. 4, the method according to an embodiment of the present disclosure may be performed by a UE and may include receiving DCI for scheduling PDSCHs on different cells (S401) and receiving PDSCHs on the different cells based on the DCI (S403).

Referring to FIG. 5, the method according to another embodiment of the present disclosure may be performed by a BS and may include transmitting DCI for scheduling PDSCHs on different cells (S501) and transmitting PDSCHs on the different cells based on the DCI (S503).

In addition to the operations of FIG. 4 and/or FIG. 5, one or more of the operations described in 'DCI for scheduling PDSCHs or PUSCHs on multiple serving cells' and sections [1] to [3] may be additionally performed.

For example, DCI for scheduling PDSCHs on different cells may include one or more of fields of Antenna ports and DMRS sequence initialization.

Referring to Opt 2-2A to 2-2C, one Antenna ports field is included for cells belonging to the same shared CC group from among different cells schedulable by m-CC DCI. Bits in one Antenna ports field is determined based on the maximum number of bits in the Antenna ports field configured for single-cell scheduling for each cell.

In other words, the Antenna ports field is determined by the maximum of the M bits associated with N different cells when the corresponding field is configured to Type 1A. Referring to Table 6 and Table 8, for N cells, M bits for each cell may be determined based on the DMRS type (dmrs-Type) and maximum length (maxLength). The maximum length may be the maximum number of OFDM symbols for DL front loaded DMRS.

Referring to section [2], the DMRS sequence initialization field may be determined as 1 bit for m-CC DCI that schedules PDSCHs.

The DCI format of DCI for scheduling PDSCHs on different cells may be referred to as DCI format 1_X, where X may be a natural number greater than or equal to 3. For example, the DCI format of DCI for scheduling PDSCHs on different cells may be DCI format 1_3.

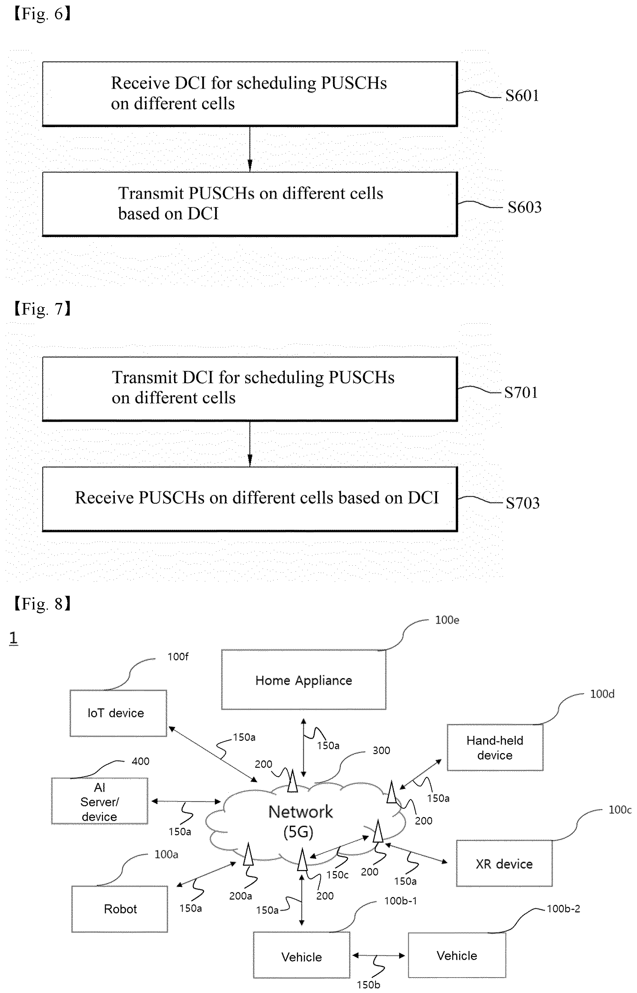

FIG. 6 and FIG. 7 are flowcharts of a signal transmission and reception method according to other embodiments of the present disclosure.

Referring to FIG. 6, the method according to an embodiment of the present disclosure may be performed by a UE and may include receiving DCI for scheduling PUSCHs on different cells (S601) and transmitting PUSCHs on the different cells based on the DCI (S603).

Referring to FIG. 7, the method according to another embodiment of the present disclosure may be performed by a BS and may include transmitting DCI for scheduling PUSCHs on different cells (S701) and receiving PUSCHs on the different cells based on the DCI (S703).

In addition to the operations of FIG. 6 and/or FIG. 7, one or more of the operations described in 'DCI for scheduling PDSCHs or PUSCHs on multiple serving cells' and sections [1] to [3] may be additionally performed.

For example, DCI for scheduling PUSCHs on different cells may include one or more of fields of Antenna ports, DMRS sequence initialization, PTRS-DMRS association, and Second PTRS-DMRS association.

Each DCI field may be configured based on a combination of one or more of the methods disclosed in sections [1] to [3].

For example, referring to section [2], the DMRS sequence initialization field is Type 1A field, and is therefore included in the m-CC DCI as a field containing common information for cells scheduled through the m-CC DCI. Scheduling is for PUSCH, and thus the DCI includes one DMRS sequence initialization field containing common information for PUSCHs. Referring to the conventional standard, the sequence of DMRS transmitted for a PUSCH may be generated based on n_SCID, which is a scrambling ID determined based on the DMRS sequence initialization field. In detail, n_SCID is configured to 0 or 1 depending on a value of the DMRS sequence initialization field.

For a PUSCH, if DFT-s-OFDM is applied to all cells to be scheduled through m-CC DCI, 0 bit may be assigned to the corresponding field. Therefore, when the transform precoder is activated for all PUSCHs to be scheduled by DCI, the DMRS sequence initialization field is determined to be 0 bit.

When CP-OFDM is applied to some of the cells to be scheduled through m-CC DCI and DFT-s-OFDM is applied to the remaining some cells, 1 bit may be allocated to the corresponding field. Therefore, when the transform precoder is deactivated for at least one of the PUSCHs to be scheduled by DCI, the DMRS sequence initialization field is determined to be 1 bit.

The size of the DMRS sequence initialization field may be determined based on the cells that are actually scheduled simultaneously at a particular point in time, instead of all cells to be scheduled via DCI. For example, when DFT-s-OFDM is applied to all actually scheduled cells, the corresponding field may not be present. Therefore, if the transform precoders for all PUSCHs on actually co-scheduled cells from among different cells are activated at a certain point in time, the DMRS sequence initialization field may be configured with 0 bit even if the transform precoders for the PUSCHs that are not actually co-scheduled at a certain point in time are deactivated.

Conversely, even if DFT-s-OFDM is applied to all the actual scheduled cells, 1 bit may be allocated to the corresponding field. However, there is no cell that uses the corresponding 1 bit from among the actually scheduled cells, and thus the corresponding bit may be considered a reserved bit. Therefore, if the transform precoder for a PUSCH that is not actually concurrently scheduled from among different cells at a certain point in time is deactivated, the DMRS sequence initialization field is configured as 1 bit even if the transform precoder for all PUSCHs on the cells that are actually concurrently scheduled at a certain point in time is activated.

Referring to Opt 3-1, and the like, when the DMRS sequence initialization field is 0 bit, the UE may assume/consider or configure n_SCID, which is a scrambling ID for DMRS sequence generation, to 0.

According to section [2], in the case of DCI for PUSCH scheduling, it may be dynamically indicated which waveform from among CP-OFDM or DFT-s-OFDM is to be applied to the corresponding PUSCH. For example, m-CC DCI includes a 1-bit indicator field that contains common information for multiple scheduled cells (or PUSCHs scheduled to the corresponding cells). Therefore, the 1-bit indicator field corresponds to Type-1A. A single 1-bit indicator field may indicate dynamic waveform switching to either CP-OFDM or DFT-s-OFDM for multiple scheduled cells (or PUSCHs scheduled to the corresponding cells). CP-OFDM or DFT-s-OFDM is determined based on whether the transform precoder is activated, and thus one 1-bit indicator field may be understood as dynamically indicating whether the transform precoder is activated for multiple scheduled cells (or PUSCHs scheduled for the corresponding cells).

Referring to Opt 2-2A to 2-2C in section [1], for the Antenna ports field related to a PUSCH, one Antenna ports field may be included for cells belonging to the same shared CC group from among different cells schedulable by m-CC DCI. The number of bits in one Antenna ports field is determined based on the maximum number of bits in the Antenna ports field configured for single-cell scheduling for each cell.

In other words, the Antenna ports field is determined by the maximum of the M bits associated with N different cells when the corresponding field is configured to Type 1A. Referring to Table 6, for N cells, M bits for each cell are determined according to the corresponding table. The corresponding table-specific conditions correspond to the conditions described for each bits of DCI format 0_1 in Table 6. For example, for a cell with 'if transform precoder is enabled, dmrs-Type=1, and maxLength=1, except that dmrs-UplinkTransformPrecoding and tp-pi2BPSK are both configured and π/2 BPSK modulation is used', the Antenna ports field is configured with 2 bits. For a cell with 'if transform precoder is disabled, dmrs-Type=2, and maxLength=2, and the value of rank is determined according to the SRS resource indicator field if the higher layer parameter txConfig = nonCodebook and according to the Precoding information and number of layers field if the higher layer parameter txConfig = codebook', the Antenna ports field is configured with 5 bits.

Here, the antenna port field is configured based on the maximum bits from among the second antenna port fields, and thus there may be cases in which there is no row index corresponding to a specific value of the antenna port field for a specific cell. According to Opt 2-2B, for a specific cell in which there is no DMRS port value corresponding to one of the values of the antenna port field, the UE may consider that the PUSCH is not scheduled. Alternatively, according to Opt 2-2C, for a specific cell that does not have a DMRS port value corresponding to one value of the antenna port field, the UE may transmit a PUSCH based on a predefined specific DMRS port value.

The DCI format of DCI for scheduling PUSCHs on different cells may be referred to as DCI format 0_X, where X may be a natural number greater than or equal to 3. For example, the DCI format of DCI for scheduling PUSCHs on different cells may be DCI format 0_3.

In addition to the operations described with respect to FIGS. 4 to 7, one or more of the operations described with respect to FIGS. 1 to 3 and/or the operations described in 'DCI for scheduling PDSCHs or PUSCHs on multiple serving cells' and sections [1] to [3] may be additionally performed in combination.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 8 illustrates a communication system 1 applied to the present disclosure.

Referring to FIG. 8, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

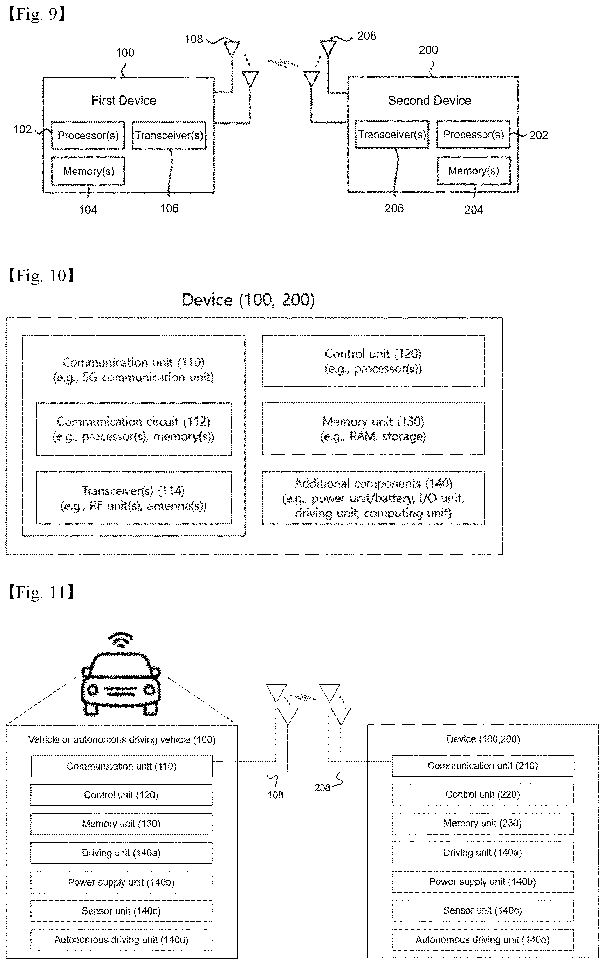

FIG. 9 illustrates wireless devices applicable to the present disclosure.

Referring to FIG. 9, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 8.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

FIG. 10 illustrates another example of a wireless device applied to the present disclosure. The wireless device may be implemented in various forms according to a use case/service (refer to FIG. 8).

Referring to FIG. 10, wireless devices 100 and 200 may correspond to the wireless devices 100 and 200 of FIG. 9 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 9. For example, the transceiver(s) 114 may include the one or more transceivers 106 and 206 and/or the one or more antennas 108 and 208 of FIG. 9. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 8), the vehicles (100b-1 and 100b-2 of FIG. 8), the XR device (100c of FIG. 8), the hand-held device (100d of FIG. 8), the home appliance (100e of FIG. 8), the IoT device (100f of FIG. 8), a digital broadcasting terminal, a hologram device, a public safety device, an MTC device, a medical device, a FinTech device (or a finance device), a security device, a climate/environment device, the AI server/device (400 of FIG. 8), the BSs (200 of FIG. 8), a network node, or the like. The wireless device may be mobile or fixed according to a use case/service.

In FIG. 10, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 11 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 11, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 10, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method of transmitting a signal by a user equipment (UE) in a wireless communication system, the method comprising:
receiving downlink control information (DCI) for scheduling physical downlink shared channels (PUSCHs) on different cells; and
transmitting the PUSCHs on the different cells based on the DCI,
wherein the DCI includes one demodulation reference signal (DMRS) sequence initialization field including common information for the PUSCHs, and
wherein a sequence of a DMRS associated with each PUSCH of the cells is generated based on the DMRS sequence initialization field.

2. The method of claim 1, wherein, based on activation of a transform precoder for all of the PUSCHs, the DMRS sequence initialization field is configured with 0 bit, and
wherein the DMRS for each of the cells is generated based on a scrambling ID configured to 0.

3. The method of claim 1, wherein, based on deactivation of a transform precoder for at least one of the PUSCHs, the DMRS sequence initialization field is configured with 1 bit.

4. The method of claim 1, wherein, based on a transform precoders for all PUSCHs on actually co-scheduled cells from among different cells being activated at a certain point in time, the DMRS sequence initialization field is configured with 0 bit even if a transform precoder for a PUSCH that is not actually co-scheduled at the certain point in time are deactivated, and
wherein the DMRS for each of the cells is generated based on a scrambling ID configured to 0.

5. The method of claim 1, wherein, based on a transform precoder for a PUSCH that is not actually concurrently scheduled from among different cells being deactivated at a certain point in time, the DMRS sequence initialization field is configured with 1 bit even if transform precoders for all PUSCHs on the cells that are actually co-scheduled at the certain point in time is activated.

6. The method of claim 5, wherein the 1 bit is considered a reserved bit.

7. The method of claim 1, wherein the DCI includes one antenna ports field for the different cells,
wherein a DMRS port value of the DMRS for each of the cells is determined based on the antenna ports field,
wherein one second antenna ports field per the cells is configured for DCI for scheduling a PUSCH within one cell, and
wherein bits of the antenna ports field are determined based on a maximum value from among configured bits of second antenna port fields.

8. The method of claim 7, wherein, based on that there is no DMRS port value corresponding to one of the values for a specific cell from among the cells, the PUSCH for the specific cell is considered as not scheduled.

9. The method of claim 7, wherein, based on that there is no DMRS port value corresponding to one of the values for a specific cell from among the cells, the PUSCH for the specific cell is transmitted based on a predefined specific DMRS port value.

10. The method of claim 1, wherein the DCI includes one 1-bit indicator field containing common information for the PUSCHs, and
the 1-bit indicator field dynamically indicates whether a transform precoder for the PUSCHs is activated.

11. A user equipment (UE) for receiving a signal in a wireless communication system, the UE comprising:
at least one transceiver;
at least one processor; and
at least one memory operatively connected to the at least one processor and configured to store instructions that when executed cause the at least one processor to perform a specific operation including:
receiving downlink control information (DCI) for scheduling physical downlink shared channels (PUSCHs) on different cells; and
transmitting the PUSCHs on the different cells based on the DCI,
wherein the DCI includes one demodulation reference signal (DMRS) sequence initialization field including common information for the PUSCHs, and
wherein a sequence of a DMRS associated with each PUSCH of the cells is generated based on the DMRS sequence initialization field.

12. An apparatus for a user equipment (UE), the apparatus comprising:
at least one processor; and
at least one computer memory operatively connected to the at least one processor and configured to when executed cause the at least one processor to perform an operation including:
receiving downlink control information (DCI) for scheduling physical downlink shared channels (PUSCHs) on different cells; and
transmitting the PUSCHs on the different cells based on the DCI,
wherein the DCI includes one demodulation reference signal (DMRS) sequence initialization field including common information for the PUSCHs, and
wherein a sequence of a DMRS associated with each PUSCH of the cells is generated based on the DMRS sequence initialization field.

13. A computer-readable non-volatile storage medium including at least one computer program for causing at least one processor to perform an operation comprising:
receiving downlink control information (DCI) for scheduling physical downlink shared channels (PUSCHs) on different cells; and
transmitting the PUSCHs on the different cells based on the DCI,
wherein the DCI includes one demodulation reference signal (DMRS) sequence initialization field including common information for the PUSCHs, and
wherein a sequence of a DMRS associated with each PUSCH of the cells is generated based on the DMRS sequence initialization field.

14. A method of receiving a signal by a base station (BS) in a wireless communication system, the method comprising:
transmitting downlink control information (DCI) for scheduling physical downlink shared channels (PDSCHs) on different cells; and
receiving the PUSCHs on the different cells based on the DCI,
wherein the DCI includes one demodulation reference signal (DMRS) sequence initialization field including common information for the PUSCHs, and
wherein a sequence of a DMRS associated with each PUSCH of the cells is generated based on the DMRS sequence initialization field.

15. A base station (BS) for transmitting a signal in a wireless communication system, the BS comprising:
at least one transceiver;
at least one processor; and
at least one memory operatively connected to the at least one processor and configured to store instructions that when executed cause the at least one processor to perform a specific operation including:
transmitting downlink control information (DCI) for scheduling physical downlink shared channels (PDSCHs) on different cells; and
receiving the PUSCHs on the different cells based on the DCI,
wherein the DCI includes one demodulation reference signal (DMRS) sequence initialization field including common information for the PUSCHs, and
wherein a sequence of a DMRS associated with each PUSCH of the cells is generated based on the DMRS sequence initialization field.
